# EUROPEAN PATENT APPLICATION

(11) **EP 4 318 755 A1**
(43) Date of publication of application: **07.02.2024**
(21) Application number: 22917735.7
(22) Date of filing: 05.01.2022
(51) Int. Cl.: H01M 50/207

(54) **BATTERY, ELECTRIC DEVICE, AND METHOD AND DEVICE FOR PREPARING BATTERY**

(71) Applicant: Contemporary Amperex Technology Co., Limited, Ningde, Fujian 352100 (CN)
(72) Inventor: CHEN, Wei, Ningde, Fujian 352100 (CN); JIN, Zelin, Ningde, Fujian 352100 (CN); SHI, Dongyang, Ningde, Fujian 352100 (CN)
(74) Representative: Gong, Jinping
(86) International application number: PCT/CN2022/070306
(87) International publication number: WO 2023/130258

(57) **Abstract**

Provided are a battery (300), a power consumption apparatus, and a method and apparatus for producing a battery (300). The battery (300) includes: a plurality of groups of electrode assemblies (310); an insulating housing (320), where the insulating housing (320) includes a plurality of accommodating spaces (321), each accommodating space (321) has an opening, adjacent accommodating spaces (321) are separated by a barrier (322), and each accommodating space (321) is used to accommodate one group of the electrode assemblies (310); and an end cover (330) provided with a plurality of pairs of electrode terminals (331), where each pair of electrode terminals (331) corresponds to one of the accommodating spaces (321), where the end cover (330) is connected to the insulating housing (320), and covers openings of the plurality of accommodating spaces (321), so as to enclose the plurality of groups of electrode assemblies (310) in the plurality of accommodating spaces (321). The battery (300), the power consumption apparatus, and the method and apparatus for producing the battery (300) can increase energy density of the battery (300).

## Description

### TECHNICAL FIELD

The present application relates to the field of battery technology, in particular to a battery, a power consumption apparatus, and a method and apparatus for producing a battery.

### BACKGROUND

Energy saving and emission reduction is the key to sustainable development of the automobile industry. Under such circumstance, electric vehicles have become an important component of the sustainable development of the automobile industry due to advantages in energy saving and environmental protection. For the electric vehicles, battery technology is an important factor for their development.

Development of the battery technology needs to take many aspects of factors into account at the same time, energy density is a relatively important factor, and therefore, how to increase energy density of a battery is a problem that has been studied.

### SUMMARY

Embodiments of the present application provide a battery, a power consumption apparatus, and a method and apparatus for producing a battery, which can increase energy density of the battery.

In a first aspect, a battery is provided, including: a plurality of groups of electrode assemblies; an insulating housing, where the insulating housing includes a plurality of accommodating spaces, each accommodating space has an opening, adjacent accommodating spaces are separated by a barrier, and each accommodating space is used to accommodate one group of the electrode assemblies; and an end cover provided with a plurality of pairs of electrode terminals, where each pair of electrode terminals corresponds to one of the accommodating spaces, where the end cover is connected to the insulating housing, and covers openings of the plurality of accommodating spaces, so as to enclose the plurality of groups of electrode assemblies in the plurality of accommodating spaces.

In this embodiment, the insulating housing is divided into the plurality of accommodating spaces by the barrier, and each accommodating space is used to accommodate one group of the electrode assemblies. In addition, through the connection between the end cover provided with the plurality of pairs of electrode terminals and the insulating housing, the plurality of groups of electrode assemblies are enclosed in the plurality of accommodating spaces, so that a battery at a module level can be packaged in one insulating housing. In comparison with a module composed of a plurality of independent battery cells, the number of barriers between adjacent electrode assemblies is reduced from two layers of barriers of two independent housings to one layer of barrier, volume occupied by the housing is reduced, and energy density of the battery can be significantly increased.

In a possible implementation manner, two ends of the accommodating space each has an opening, the end cover includes a first end cover and a second end cover, and the first end cover and the second end cover respectively cover openings at the two ends of the accommodating space; the plurality of pairs of electrode terminals include a plurality of positive electrode terminals and a plurality of negative electrode terminals, the plurality of positive electrode terminals are arranged on the first end cover, and the plurality of negative electrode terminals are arranged on the second end cover; and each of the accommodating spaces corresponds to one of the positive electrode terminals and one of the negative electrode terminals.

In this embodiment, by arranging a positive electrode terminal and a negative electrode terminal corresponding to one accommodating space on different end covers, insulation design of the battery is facilitated.

In a possible implementation manner, an inner wall of the accommodating space or an outer wall of the insulating housing is coated with a metal layer.

In this embodiment, by coating the metal layer on the inner wall of the accommodating space or the outer wall of the insulating housing, the electrode assembly in the insulating housing can be isolated from external water vapor, thereby improving safety of the battery.

In a possible implementation manner, an outer wall of the insulating housing is cladded with an aluminum-plastic film.

In this embodiment, the outer wall of the insulating housing is cladded with the aluminum-plastic film, so that the electrode assembly in the insulating housing can be isolated from external water vapor, thereby improving safety of the battery.

In a possible implementation manner, the end cover is connected to the insulating housing and the barrier in a sealing manner by fixing glue.

In this embodiment, the end cover is connected to the insulating housing and the barrier in a sealing manner by the fixing glue, so that independent sealing performance of each accommodating space can be realized, thereby improving the overall sealing performance of the battery.

In a possible implementation manner, the end cover is formed by welding a plurality of metal sub-end covers, and each of the metal sub-end covers is provided with electrode terminals corresponding to at least one of the accommodating spaces.

In this embodiment, the end cover is formed by welding the plurality of metal sub-end covers, so that on the basis of the existing battery structure, small changes are made and good compatibility is realized.

In a possible implementation manner, the end cover is formed by injection molding of a plurality of metal sub-end covers, and each of the metal sub-end covers is provided with electrode terminals corresponding to at least one of the accommodating spaces.

In this embodiment, the end cover is formed by injection molding of the plurality of metal sub-end covers, so that the end cover has a simple structure and the structure is easy to be realized, and on the basis of the existing battery structure, small changes are made and good compatibility is realized.

In a possible implementation manner, the end cover is formed by arranging electrode terminals corresponding to the plurality of accommodating spaces on a plastic plate.

In this embodiment, the end cover is formed by fabricating a plurality of sub-end covers on the plastic plate, so that low costs are realized.

In a possible implementation manner, the insulating housing is made of at least one of polypropylene, glass fiber plastic, maleic anhydride grafted polypropylene and nylon composite structural plastic.

In this embodiment, since a special functional material itself can realize water vapor isolation, there is no need to clad another metal material on an inner wall or an outer wall of the insulating housing, so that energy density of the battery can be further improved.

In a possible implementation manner, the electrode assembly is provided with tabs, and the battery further includes: a connection member configured to connect the tabs and the electrode terminals.

In this embodiment, by setting the connection member, electrical connection between the tabs and the electrode terminals can be realized, thereby realizing a power supply function of the battery.

In a possible implementation manner, the battery further includes: a bus component configured to electrically connect electrode terminals corresponding to the plurality of accommodating spaces.

In a possible implementation manner, the insulating housing is integrally formed by extrusion.

In this embodiment, the insulating housing is integrally formed by extrusion, which is simple in a process, and can improve sealing performance of the battery.

In a second aspect, a power consumption apparatus is provided, including the battery in the first aspect and any possible implementation manner of the first aspect, where the battery is configured to provide electrical energy for the power consumption apparatus.

In a third aspect, a method for producing a battery is provided, including: providing a plurality of groups of electrode assemblies; providing an insulating housing, where the insulating housing includes a plurality of accommodating spaces, each accommodating space has an opening, adjacent accommodating spaces are separated by a barrier, and each accommodating space is used to accommodate one group of the electrode assemblies; and providing an end cover provided with a plurality of pairs of electrode terminals, where each pair of electrode terminals corresponds to one of the accommodating spaces, where the end cover is connected to the insulating housing, and covers openings of the plurality of accommodating spaces, so as to enclose the plurality of groups of electrode assemblies in the plurality of accommodating spaces.

In a fourth aspect, an apparatus for producing a battery is provided, including: a providing module configured to: provide a plurality of groups of electrode assemblies; provide an insulating housing, where the insulating housing includes a plurality of accommodating spaces, each accommodating space has an opening, adjacent accommodating spaces are separated by a barrier, and each accommodating space is used to accommodate one group of the electrode assemblies; and provide an end cover provided with a plurality of pairs of electrode terminals, where each pair of electrode terminals corresponds to one of the accommodating spaces, where the end cover is connected to the insulating housing, and covers openings of the plurality of accommodating spaces, so as to enclose the plurality of groups of electrode assemblies in the plurality of accommodating spaces.

### BRIEF DESCRIPTION OF THE DRAWINGS

In order to illustrate technical solutions in embodiments of the present application more clearly, the following briefly introduces accompanying drawings required for describing the embodiments of the present application. Apparently, the following described accompanying drawings are merely some embodiments of the present application, and those of ordinary skill in the art may still derive other drawings from these accompanying drawings without creative efforts.
FIG. 1 is a schematic structural diagram of a battery cell disclosed in an embodiment of the present application;
FIG. 2 is a schematic structural diagram of a battery disclosed in an embodiment of the present application;
FIG. 3 is a schematic diagram of a scene to which an embodiment of the present application is applicable.
FIG. 4 is a schematic exploded view of a battery provided by an embodiment of the present application.
FIG. 5 is another schematic exploded view of a battery provided by an embodiment of the present application.
FIG. 6 is a schematic structural diagram of a battery provided by an embodiment of the present application.
FIG. 7 is yet another schematic exploded view of a battery provided by an embodiment of the present application.
FIG. 8 is another schematic structural diagram of a battery provided by an embodiment of the present application.
FIG. 9 is a schematic structural diagram of an end cover provided by an embodiment of the present application.
FIG. 10-FIG. 12 are schematic three partially enlarged views of part A in FIG. 9.
FIG. 13 is a schematic structural diagram of an electrode assembly provided by an embodiment of the present application.
FIG. 14(a)-FIG. 14(c) are schematic diagrams of the connection between an electrode assembly and a connection member provided by an embodiment of the present application.
FIG. 15 is a schematic block diagram of a method for producing a battery provided by an embodiment of the present application.
FIG. 16 is a schematic block diagram of an apparatus for producing a battery provided by an embodiment of the present application.

In the accompanying drawings, the accompanying drawings are not drawn to actual scale.

### DESCRIPTION OF EMBODIMENTS

Embodiments of the present application will be described in detail below in conjunction with the accompanying drawings and the embodiments. The following detailed description of the embodiments and the accompanying drawings are used to illustrate the principles of the present application in examples, but not to limit the scope of the present application, that is, the present application is not limited to the described embodiments.

In the description of the embodiments of the present application, it should be noted that the phrase "a plurality of" means two or more, unless otherwise specified. Orientations or positional relationships indicated by terms "upper", "lower", "left", "right", "inner", "outer", or the like are only for the convenience of describing the present application and simplifying the description, and do not indicate or imply that an apparatus or element referred to must have a specific orientation, be constructed and operated in a specific orientation, and therefore cannot be understood as limitations to the present application. In addition, terms such as "first", "second" and "third" are only used for descriptive purposes, and should not be understood as indicating or implying relative importance. "Vertical" is not vertical in a strict sense, but within an allowable range of error. "Parallel" is not parallel in a strict sense, but within an allowable range of error.

Orientation words appearing in the following description are all directions shown in the drawings, and are not intended to limit the specific structure of the present application. In the description of the present application, it should be further noted that unless otherwise explicitly specified and defined, terms such as "installation", "interconnection", and "connection" should be interpreted in a broad sense, for example, it may be a fixed connection, or a detachable connection, or an integrated connection; or it may be a direct connection, or an indirect connection through an intermediate medium. Those of ordinary skill in the art can understand the specific meanings of the above terms in the present application according to specific situations.

A word "embodiment" referred to in the present application means that a particular feature, structure, or characteristic described in combination with the embodiment can be included in at least one embodiment of the present application. The appearances of the word in various places in the specification are not necessarily all referring to the same embodiment, nor are separate or alternative embodiments mutually exclusive of other embodiments. Those skilled in the art understand, in explicit and implicit manners, that an embodiment described in the present application may be combined with other embodiments.

The term "and/or" in the present application is only a kind of association relationship describing associated objects, which means that there may be three kinds of relationships. For example, A and/or B may mean the following three cases: A exists alone, both A and B exist at the same time, and B exists alone. In addition, the character "/" in the present application generally indicates that the associated objects before and after the character are in an "or" relationship.

The phrase "a plurality of" appeared in the present application refers to two or more (including two), similarly, the phrase "a plurality of groups" refers to two or more groups (including two groups), and "a plurality of pieces" refers to two or more pieces (including two pieces).

With the development of the times, electric vehicles have huge market prospects due to their environmental protection, low voice, and low costs of use, and can effectively promote energy saving and emission reduction, which is beneficial to social development and progress. For the electric vehicles, battery technology is an important factor for their development.

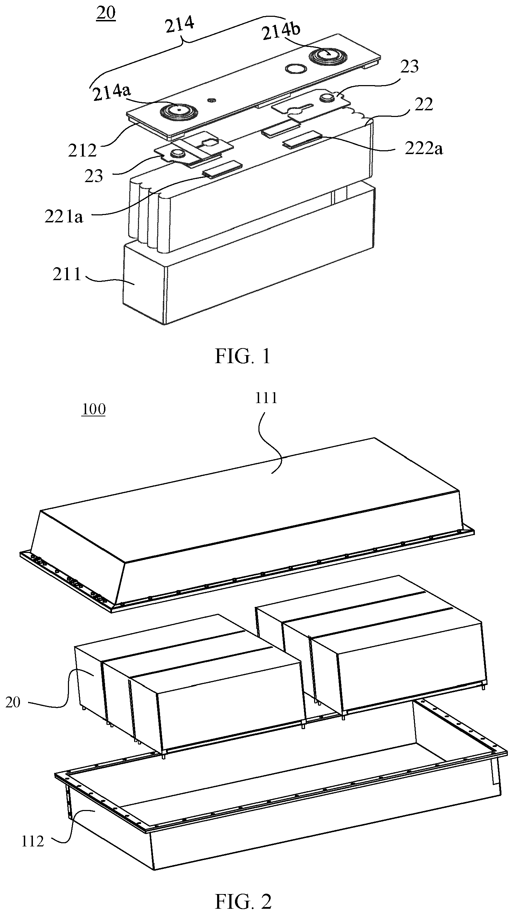

Given factors such as sealing performance, insulation performance, and structural strength of a battery, current batteries need to be packaged step by step from an electrode assembly to a module level before they can be used. For example, FIG. 1 shows a schematic structural diagram of packaging an electrode assembly into a battery cell. FIG. 2 shows a schematic structural diagram of packaging a battery cell into a battery.

As shown in FIG. 1, a battery cell 20 includes one or more electrode assemblies 22, a housing 211 and a cover plate 212. Walls of the housing 211 and the cover plate 212 are all referred to as walls of the battery cell 20. The housing 211 depends on the combined shape of one or more electrode assemblies 22. For example, the housing 211 may be a hollow cuboid or cube or cylinder, and one of surfaces of the housing 211 has an opening so that one or more electrode assemblies 22 may be placed in the housing 211. For example, when the housing 211 is a hollow cuboid or cube, one of the surfaces of the housing 211 is an open surface, that is, the surface does not have a wall so that the inside and outside of the housing 211 are in communication. When the housing 211 may be a hollow cylinder, an end surface of the housing 211 is an open surface, that is, the end surface does not have a wall so that the inside and outside of the housing 211 are in communication. The cover plate 212 covers the opening and is connected to the housing 211 to form a closed cavity for placing the electrode assembly 22. The housing 211 is filled with an electrolyte, such as an electrolytic solution.

The battery cell 20 may further include two electrode terminals 214, and the two electrode terminals 214 may be disposed on the cover plate 212. The cover plate 212 is usually in the shape of a flat plate, and the two electrode terminals 214 are fixed on a flat plate surface of the cover plate 212, and the two electrode terminals 214 are a positive electrode terminal 214a and a negative electrode terminal 214b respectively. Each electrode terminal 214 is respectively provided with a connection member 23, which may also be referred to as a current collection member 23, located between the cover plate 212 and the electrode assembly 22 for electrically connecting the electrode assembly 22 and the electrode terminal 214.

As shown in FIG. 1, each electrode assembly 22 has a first tab 221a and a second tab 222a. The first tab 221a and the second tab 222a have opposite polarities. For example, when the first tab 221a is a positive tab, the second tab 222a is a negative tab. The first tab 221a of one or more electrode assemblies 22 is connected to one electrode terminal through one connection member 23, and the second tab 222a of one or more electrode assemblies 22 is connected to another electrode terminal through another connection member 23. For example, the positive electrode terminal 214a is connected to the positive tab through one connection member 23, and the negative electrode terminal 214b is connected to the negative tab through another connection member 23.

In the battery cell 20, according to actual usage requirements, the electrode assembly 22 may be set to be single or plural in number. As shown in FIG. 1, the battery cell 20 is provided with four independent electrode assemblies 22.

As shown in FIG. 2, the battery 100 may include a plurality of battery cells 20. The battery 100 may further include a box (or called a covering), and an interior of the box is a hollow structure, and the plurality of battery cells 20 are accommodated in the box. As shown in FIG. 2, the box may include two portions, which are herein referred to as a first portion 111 and a second portion 112 respectively, and the first portion 111 and the second portion 112 cover each other. Shapes of the first portion 111 and the second portion 112 may be determined according to the combined shape of the plurality of battery cells 20, and the first portion 111 and the second portion 112 may each have an opening. For example, both the first portion 111 and the second portion 112 may be hollow cuboids and each has only one face as an open face, an opening of the first portion 111 and an opening of the second portion 112 are arranged oppositely, and the first portion 111 and the second portion 112 are buckled with each other to form a box with a closed cavity. The plurality of battery cells 20 are combined in parallel, in series or in series-parallel and placed in the box formed by buckling the first portion 111 and the second portion 112.

It can be seen from FIG. 1 and FIG. 2 that the battery 100 is formed by packaging the electrode assembly 22 to form the battery cell 20, and then packaging the plurality of battery cells 20. Energy density loss of the battery 100 is inevitable in the packaging process step by step. For example, a space between electrode assemblies of adj acent battery cells includes at least two layers of barriers of two independent housings. After the plurality of battery cells are grouped, these barriers will occupy a large space and affect energy density of the battery.

In view of this, an embodiment of the present application provides a technical solution in which a plurality of groups of electrode assemblies are packaged through an insulating housing having a plurality of accommodating spaces and an end cover, so that a battery at a module level can be packaged in one insulating housing. In comparison with a module composed of a plurality of independent battery cells, the number of barriers between adjacent electrode assemblies is reduced from two layers of barriers of two independent housings to one layer of barrier, volume occupied by the housing is reduced, and energy density of the battery can be significantly increased.

The technical solution described in the embodiment of the present application is applied to various apparatuses using a battery, for example, a mobile phone, a portable device, a notebook computer, an electromobile, an electric toy, an electric tool, an electric vehicle, a ship, a spacecraft, or the like. For example, the spacecraft includes an airplane, a rocket, a space shuttle, a spaceship, and the like.

It should be understood that the technical solution described in the embodiment of the present application is not only applicable to the device described above, but also applicable to all devices using a battery, but for the sake of brevity of description, the following embodiments are all described by an example of an electric vehicle.

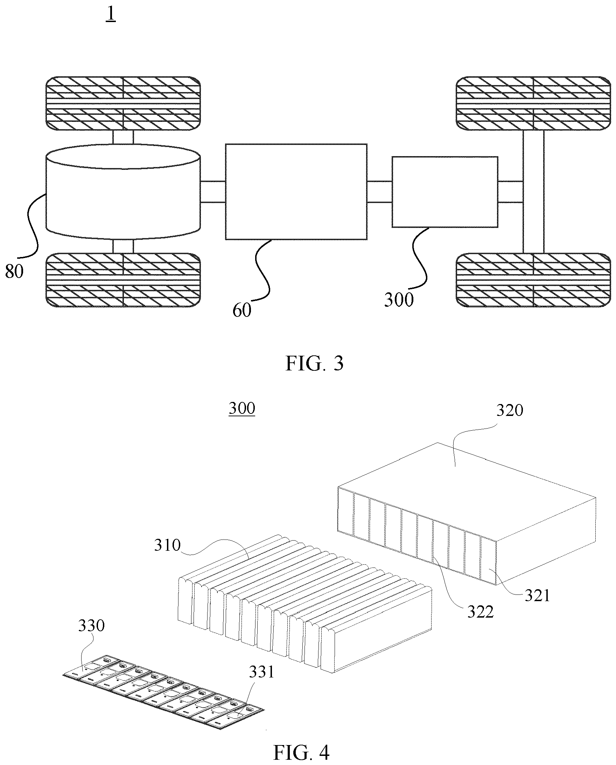

For example, as shown in FIG. 3, FIG. 3 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 80, a controller 60 and a battery 300 may be disposed inside the vehicle 1, and the controller 60 is configured to control the battery 300 to supply power to the motor 80. For example, the battery 300 may be disposed at the bottom, head or tail of the vehicle 1. The battery 300 may be used for supplying power to the vehicle 1. For example, the battery 300 may serve as an operation power supply of the vehicle 1, and is used for a circuit system of the vehicle 1, for example, for a working power demand of the vehicle 1 during startup, navigation, and running. In another embodiment of the present application, the battery 300 may not only serve as an operation power supply of the vehicle 1, but also as a driving power supply of the vehicle 1, replacing or partially replacing fuel or natural gas to provide driving power for the vehicle 1.

In the present application, the battery 300 may include a lithium-ion secondary battery, a lithium-ion primary battery, a lithium-sulfur battery, a sodium/lithium-ion battery, a sodium-ion battery or a magnesium-ion battery, which is not limited by the embodiment of the present application.

FIG. 4 shows a schematic exploded view of the battery 300 provided by an embodiment of the present application. As shown in FIG. 4, the battery 300 includes a plurality of groups of electrode assemblies 310.

The electrode assembly 310 is generally composed of a positive electrode sheet, a negative electrode sheet and a separator. The operation of the battery 300 mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and a current collector not coated with the positive electrode active material layer protrudes from the current collector coated with the positive electrode active material layer and is used as a positive tab. As an example, in a lithium-ion battery, the material of the positive electrode current collector may be aluminum, and the positive electrode active material may be lithium cobalt oxide, lithium iron phosphate, ternary lithium or lithium manganate, etc. The negative electrode sheet includes a negative electrode current collector and a negative electrode active material layer. The negative electrode active material layer is coated on a surface of the negative electrode current collector, and a current collector not coated with the negative electrode active material layer protrudes from the current collector coated with the negative electrode active material layer and is used as a negative tab. The material of the negative electrode current collector may be copper, and the negative electrode active material may be carbon or silicon, etc. In order to ensure that no fusing occurs upon flowing of a large current, there are a plurality of positive tabs which are stacked together, and there are a plurality of negative tabs which are stacked together. A material of the separator may be polypropylene (PP), polyethylene (PE), or the like. In addition, the electrode assembly 310 may be in a winding structure or a laminated structure, and the embodiment of the present application is not limited thereto.

As shown in FIG. 4, the battery 300 further includes an insulating housing 320, the insulating housing 320 may include a plurality of accommodating spaces 321, each accommodating space 321 has an opening, two adjacent accommodating spaces 321 are separated by a barrier 322, and each accommodating space 321 is used to accommodate a group of the electrode assemblies 310.

It should be understood that the number of electrode assemblies 310 accommodated in one accommodating space 321 can refer to the number of electrode assemblies included in the battery cell 20. A group of the electrode assemblies 310 may include one electrode assembly 310 or a plurality of electrode assemblies 310. Different groups of electrode assemblies 310 among the plurality of groups of electrode assemblies 310 in the embodiment of the present application may include the same or different number of electrode assemblies 310. In addition, in addition to accommodating one group of the electrode assemblies 310, one accommodating space 321 may further accommodate an electrolytic solution corresponding to the group of electrode assemblies 310. That is, electric energy provided by the electrode assemblies 310 accommodated in one accommodating space 321 may be equal to electric energy provided by one battery cell 20.

In the embodiment of the present application, provided safety of the battery 300, the housing 320 may be made of insulating material, and the barrier 322 may also be made of insulating material. That is, the electrode assemblies 310 in different accommodating spaces 321 are disposed in an insulating manner.

Optionally, the accommodating space 321 may be in the shape of a cylinder, a cuboid or other shapes. For example, as shown in FIG. 4, the accommodating space 321 is a cuboid, and two adjacent accommodating spaces 321 may be separated by a plate-shaped barrier 322. For another example, the accommodating space 321 is a cylinder, and two adjacent accommodating spaces 321 may be separated by a barrier 322 with two arcs circumscribing each other. Although the embodiment of the present application is mostly described by taking the accommodating space 321 as a cuboid as an example, the embodiment of the present application is not limited to this.

Each accommodating space 321 may have an opening, and the electrode assembly 310 may be disposed in the accommodating space 321 through the opening. In one example, only one end of the accommodating space 321 has an opening, while the other end is closed, that is, the accommodating space 321 is a semi-closed cavity. In another example, two ends of the accommodating space 321 each has an opening, that is, the accommodating space 321 is a cavity through which two ends pass through. It should be noted that, that only one end of the accommodating space 321 has an opening generally means that the plurality of accommodating spaces 321 included in the insulating housing 320 have openings at the same end.

As shown in FIG. 4, the battery 300 further includes an end cover 330 provided with a plurality of pairs of electrode terminals 331, and each pair of electrode terminals 331 corresponds to one of the accommodating spaces 321.

The end cover 330 in the embodiment of the present application may be provided with a plurality of pairs of electrode terminals 331, and each pair of electrode terminals includes a positive electrode terminal and a negative electrode terminal. In an example, the plurality of pairs of electrode terminals 331 are in one-to-one correspondence with the plurality of accommodating spaces 321. That is, one accommodating space 321 corresponds to a pair of electrode terminals 331. In another example, the plurality of electrode terminals 331 may not be in one-to-one correspondence with the plurality of accommodating spaces 321. For example, one pair of electrode terminals 331 correspond to the plurality of accommodating spaces 321, that is, the pair of electrode terminals 331 are connected to electrode assemblies 310 in the plurality of accommodating spaces 321.

Further, the end cover 330 is connected to the insulating housing 320, and covers openings of the plurality of accommodating spaces 321, so as to enclose the plurality of groups of electrode assemblies 310 in the plurality of accommodating spaces 321. The connection between the end cover 330 and the insulating housing 320 can prevent liquid or other foreign objects from affecting the charging or discharging of the battery 300.

Therefore, in the battery 300 provided by the embodiment of the present application, the insulating housing 320 is divided into the plurality of accommodating spaces 321 by the barrier 322, and each accommodating space 321 is used to accommodate one group of the electrode assemblies 310. In addition, through the connection between the end cover 330 provided with the plurality of pairs of electrode terminals 331 and the insulating housing 320, the plurality of groups of electrode assemblies 310 are enclosed in the plurality of accommodating spaces 321, so that a battery 300 at a module level can be packaged in one insulating housing 320. In comparison with a module composed of a plurality of independent battery cells 20, the number of barriers between adjacent electrode assemblies is reduced from two layers of barriers of two independent housings to one layer of barrier, volume occupied by the housing is reduced, and energy density of the battery 300 can be significantly increased.

Optionally, in an embodiment of the present application, the insulating housing 320 may be integrally formed by extrusion to form the plurality of accommodating spaces 321. For example, the insulating housing 320 and the barrier 322 may be integrally formed.

The insulating housing 320 is integrally formed by extrusion, which is simple in a process, and can improve sealing performance of the battery 300.

In another example, the insulating housing 320 and the barrier 322 may be independent parts, which are fixedly connected by fixing glue.

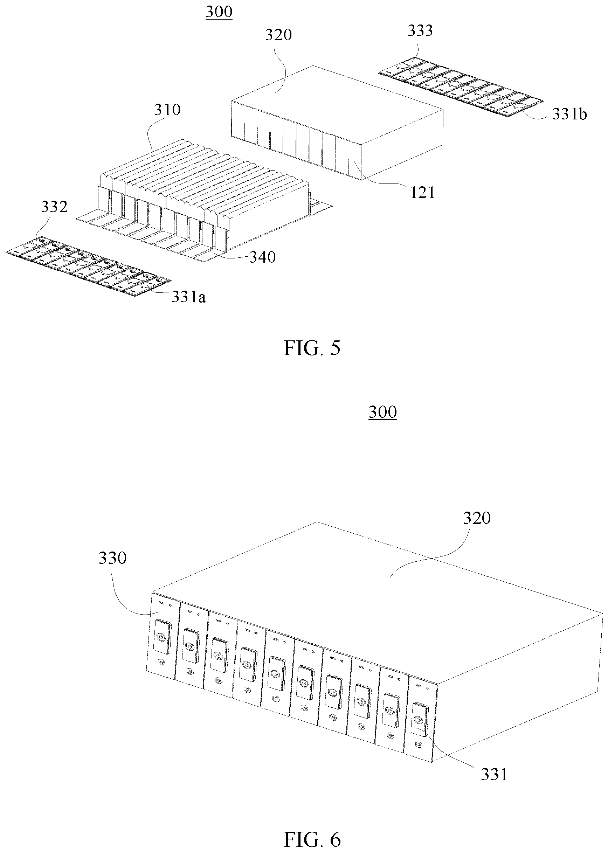

FIG. 5 shows another schematic exploded view of the battery 300 provided by an embodiment of the present application. FIG. 6 shows a schematic structural diagram of the battery 300 shown in FIG. 5. As shown in FIG. 5, two ends of the accommodating space 321 each has an opening, and the end cover 330 includes a first end cover 332 and a second end cover 333, and the first end cover 332 and the second end cover 333 cover openings at the two ends of the plurality of accommodating spaces 321 respectively; the plurality of pairs of electrode terminals 331 include a plurality of positive electrode terminals 331a and a plurality of negative electrode terminals 331b, and each accommodating space 321 corresponds to one of the positive electrode terminals 331a and one of the negative electrode terminals 331b. The plurality of positive electrode terminals 331a are arranged on the first end cover 332, and the plurality of negative electrode terminals 331b are arranged on the second end cover 333.

By arranging a positive electrode terminal 331a and a negative electrode terminal 331b corresponding to one accommodating space 321 on different end covers 330, insulation design of the battery 300 is facilitated.

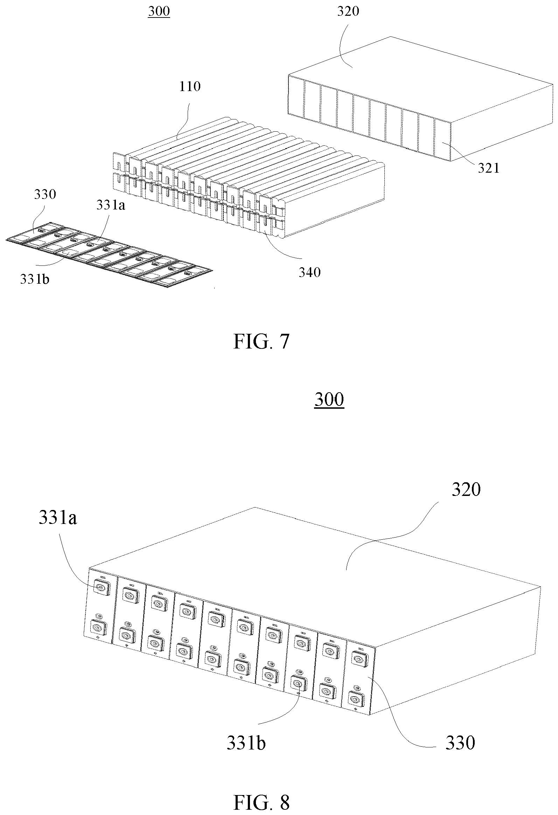

FIG. 7 shows yet another schematic exploded view of the battery 300 provided by an embodiment of the present application. FIG. 8 shows a schematic structural diagram of the battery 300 shown in FIG. 7. As shown in FIG. 7, one end of the accommodating space 321 has an opening, and the plurality of pairs of electrode terminals 331 include a plurality of positive electrode terminals 331a and a plurality of negative electrode terminals 331b, and the plurality of positive electrode terminals 331a and the plurality of negative electrode terminals 331b are all arranged on the end cover 330 in pairs. The end cover 330 covers openings of the plurality of accommodating spaces 321, and each accommodating space 321 corresponds to one positive electrode terminal 331a and one negative electrode terminal 331b.

It should be noted that, when the plurality of positive electrode terminals 331a and the plurality of negative electrode terminals 331 are arranged on the same end cover 330, the accommodating space 321 may have an opening at one end, or openings at two ends. For example, only one end of the accommodating space 321 has an opening, so the other end of the accommodating space 321 may be integrally formed with the insulating housing 320. In this case, the insulating housing 320 may form a plurality of accommodating spaces 321 through an injection molding process. For another example, two ends of the accommodating space 321 each has an opening, and the end cover 330 configured to cover one end of the accommodating space 321 may be provided with the plurality of positive electrode terminals 331a and the plurality of negative electrode terminals 331b, and the end cover 330 configured to cover another end of the accommodating space 321 may not be provided with an electrode terminal 331, and is only configured to seal the accommodating space 321. In this case, the insulating housing 320 may be integrally formed by extrusion to form the plurality of accommodating spaces 321.

Optionally, in an embodiment of the present application, the insulating housing 320 may be made of plastic material. For example, the insulating housing 320 and the barrier 322 are both made of plastic material and integrally formed to form the plurality of accommodating spaces 321 by extrusion or injection molding.

In one example, an inner wall of the accommodating space 321 or an outer wall of the insulating housing 320 is coated with a metal layer. For example, the metal layer may be metal aluminum or metal copper.

Since the insulating housing 320 is made of insulating material, its isolation from water vapor is relatively poor. The inner wall of the accommodating space 321 or the outer wall of the insulating housing 320 is coated with the metal layer, so that the electrode assembly 310 in the insulating housing 320 can be isolated from external water vapor, thereby improving safety of the battery 300.

In another example, an outer wall of the insulating housing 320 is cladded with an aluminum-plastic film.

Similarly, the outer wall of the insulating housing 320 is cladded with the aluminum-plastic film, so that the electrode assembly 310 in the insulating housing 320 can be isolated from external water vapor, thereby improving safety of the battery 300.

In another example, the insulating housing 320 may use special functional plastic, for example, at least one of polypropylene, glass fiber plastic, maleic anhydride grafted polypropylene and nylon composite structural plastic. Since a special functional material itself can realize water vapor isolation, there is no need to clad another metal material on an inner wall or an outer wall of the insulating housing 320, so that energy density of the battery 300 can be further improved.

Optionally, in an embodiment of the present application, the end cover 330 may be connected to the insulating housing 320 and the barrier 322 in a sealing manner by fixing glue.

The end cover 330 is connected to the insulating housing 320 and the barrier 322 in a sealing manner by the fixing glue, so that independent sealing performance of each accommodating space 321 can be realized, thereby improving the overall sealing performance of the battery 300.

In another possible embodiment, if an inner wall of the accommodating space 321 is plated with a thicker metal layer, and the end cover 330 is also made of metal material, the end cover 330 may be selected to be welded with the insulating housing 320 and the barrier 322.

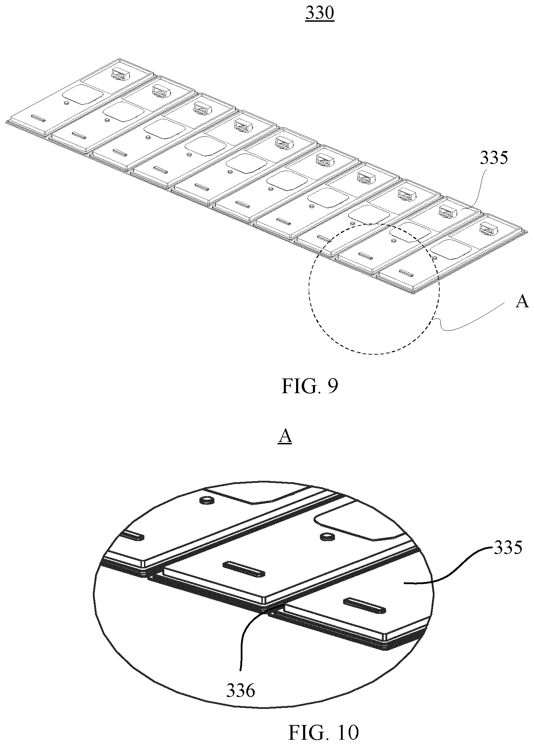

Hereinafter, with reference to FIGS. 9 to 12, the end cover 330 in the embodiment of the present application will be described in detail.

As shown in FIG. 9, the end cover 330 includes a plurality of sub-end covers 335 corresponding to the plurality of accommodating spaces 321. Each of the sub-end covers 335 is provided with electrode terminals corresponding to at least one of the accommodating spaces 321.

FIG. 10 is a schematic partially enlarged view of part A in FIG. 9. As shown in FIG. 10, the end cover 330 is formed by welding a plurality of metal sub-end covers 335. That is, the end cover 330 includes the plurality of metal sub-end covers 335, and two adjacent metal sub-end covers 335 are connected by a metal part 336.

The end cover 330 is formed by welding the plurality of metal sub-end covers 335, so that on the basis of the existing battery structure, small changes are made and good compatibility is realized.

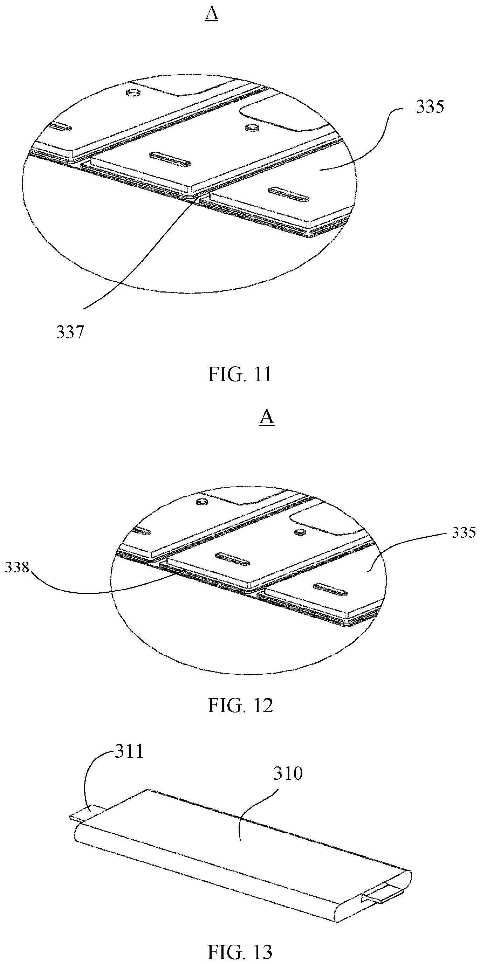

FIG. 11 is another schematic partially enlarged view of part A in FIG. 9. As shown in FIG. 11, the end cover 330 is formed by injection molding of a plurality of metal sub-end covers. That is, the end cover 330 includes the plurality of metal sub-end covers 335, and two adjacent metal sub-end covers 335 are connected by a plastic part 337.

The end cover 330 is formed by injection molding of the plurality of metal sub-end covers 335, so that the end cover has a simple structure and the structure is easy to be realized, and on the basis of the existing battery structure, small changes are made and good compatibility is realized.

FIG. 12 is yet another schematic partially enlarged view of part A in FIG. 9. As shown in FIG. 12, the end cover 330 is formed by fabricating a plurality of sub-end covers 335 on a plastic plate 338. That is, the end cover 330 includes a plurality of plastic sub-end covers 335, and the plastic sub-end covers 335 are integrally formed.

The end cover 330 is formed by fabricating the plurality of sub-end covers 335 on the plastic plate 338, so that low costs are realized.

Optionally, as shown in FIG. 13, the electrode assembly 310 is provided with tabs 311. Further, as shown in FIGS. 5 and 7, the battery 300 further includes: a connection member 340, and the connection member 340 is configured to connect the tabs 311 and the electrode terminals 331.

Optionally, the battery 300 includes a plurality of connection members 340, and each connection member 340 corresponds to one electrode terminal 311.

By setting the connection member 340, electrical connection between the tabs 311 and the electrode terminals 311 can be realized, thereby realizing a power supply function of the battery 300.

Optionally, in an embodiment of the present application, a plurality of electrode assemblies 310 may be accommodated in one accommodating space 321, for example, one accommodating space 321 may accommodate two electrode assemblies 310, and tabs 311 of the two electrode assemblies 310 may be respectively connected to the connection member 340.

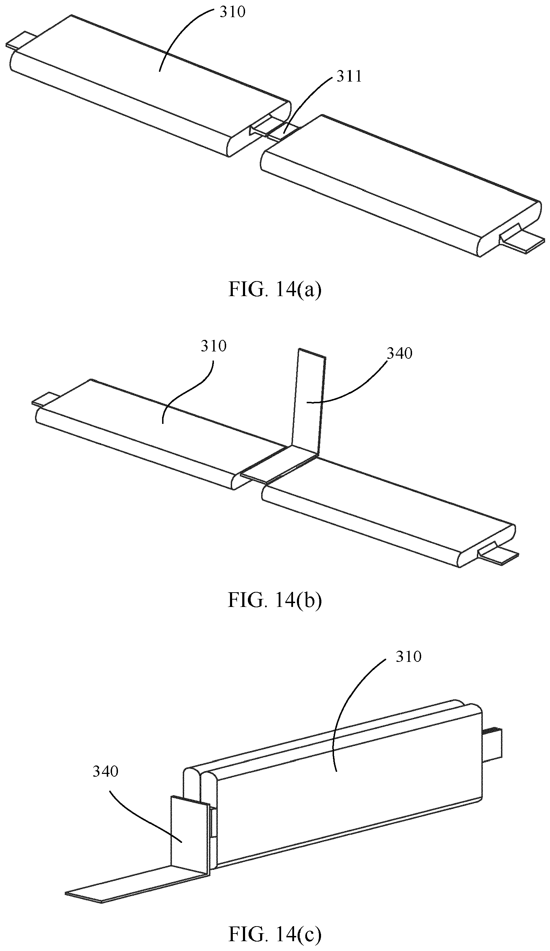

Specifically, referring to FIG. 14(a)-FIG. 14(c), as shown in FIG. 14(a), tabs 311 of two electrode assemblies 310 in the same accommodating space 321 may be arranged side by side first. Next, referring to FIG. 14(b), the connection member 340 is connected to surfaces of the tabs 311 of the two electrode assemblies 310. Finally, as shown in FIG. 14(c), the two electrode assemblies 310 are bent by 90 degrees so that surfaces with the largest area of the two electrode assemblies 310 are connected together.

Optionally, in an embodiment of the present application, the battery 300 may further include a bus component configured to electrically connect electrode terminals 331 corresponding to the plurality of accommodating spaces 321. For example, the electrode assemblies 310 in the plurality of accommodating spaces 321 are connected in series, in parallel or in series-parallel. In some embodiments, the bus component may be fixed to the electrode terminals 331 by welding.

In addition to being configured to electrically connect the electrode assemblies in different accommodating spaces 321 in the same battery 300, the bus component is also configured to realize electrical connection between different batteries 300.

An embodiment of the present application further provides a power consumption apparatus, and the power consumption apparatus may include the battery 300 in the foregoing various embodiments, so as to provide electric energy for the power consumption apparatus. Optionally, the power consumption apparatus may be a vehicle, ship or spacecraft.

By arranging the battery 300 of the foregoing embodiment in the power consumption apparatus, an insulating housing 320 is divided into a plurality of accommodating spaces 321 by a barrier 322, and each accommodating space 321 is used to accommodate one group of electrode assemblies 310. In addition, through the connection between an end cover 330 provided with a plurality of pairs of electrode terminals 331 and the insulating housing 320, a plurality of groups of electrode assemblies 310 are enclosed in the plurality of accommodating spaces 321, so that a battery 300 at a module level can be packaged in one insulating housing 320. In comparison with a module composed of a plurality of independent battery cells 20, the number of barriers between adjacent electrode assemblies is reduced from two layers of barriers of two independent housings to one layer of barrier, volume occupied by the housing is reduced, and energy density of the battery 300 can be significantly increased.

The battery and the power consumption apparatus of the embodiments of the present application are described above, and a method and apparatus for producing a battery according to embodiments of the present application will be described below, and for parts not described in detail, reference can be made to the foregoing embodiments.

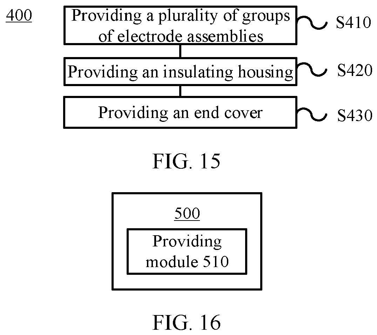

FIG. 15 shows a schematic flowchart of a method 400 for producing a battery cell according to an embodiment of the present application. As shown in FIG. 15, the method 400 may include at least part of the following content.

S410, providing a plurality of groups of electrode assemblies 310.

S420, providing an insulating housing 320, where the insulating housing 320 includes a plurality of accommodating spaces 321, each accommodating space 321 has an opening, adjacent accommodating spaces 321 are separated by a barrier 322, and each accommodating space 321 is used to accommodate one group of the electrode assemblies 310.

S430, providing an end cover 330 provided with a plurality of pairs of electrode terminals 331, where each pair of electrode terminals 331 corresponds to one of the accommodating spaces 321.

The end cover 330 is connected to the insulating housing 320, and covers openings of the plurality of accommodating spaces 321, so as to enclose the plurality of groups of electrode assemblies 310 in the plurality of accommodating spaces 321.

FIG. 16 shows a schematic block diagram of an apparatus 500 for producing a battery 300 according to an embodiment of the present application. As shown in FIG. 16, the apparatus 500 includes a providing module 510 configured to: provide a plurality of groups of electrode assemblies 310; provide an insulating housing 320, where the insulating housing 320 includes a plurality of accommodating spaces 321, each accommodating space 321 has an opening, adjacent accommodating spaces 321 are separated by a barrier 322, and each accommodating space 321 is used to accommodate a group of the electrode assemblies 310; and provide an end cover 330 provided with a plurality of pairs of electrode terminals 331, where each pair of electrode terminals 331 corresponds to one of the accommodating spaces 321, where the end cover 330 is connected to the insulating housing 320 and covers openings of the plurality of accommodating spaces 321, so as to enclose the plurality of groups of electrode assemblies 310 in the plurality of accommodating spaces 321.

While the present application has been described with reference to preferred embodiments, various improvements may be made and equivalents may be used to substitute parts therein without departing from the scope of the present application. In particular, as long as there is no structural conflict, technical features mentioned in various embodiments can be combined in any manner. The present application is not limited to the specific embodiments disclosed herein, but includes all technical solutions falling within the scope of the claims.

## Claims

1. A battery, comprising:
a plurality of groups of electrode assemblies;
an insulating housing, wherein the insulating housing comprises a plurality of accommodating spaces, each accommodating space has an opening, adjacent accommodating spaces are separated by a barrier, and each accommodating space is used to accommodate one group of the electrode assemblies; and
an end cover provided with a plurality of pairs of electrode terminals, wherein each pair of electrode terminals corresponds to one of the accommodating spaces,
wherein the end cover is connected to the insulating housing, and covers openings of the plurality of accommodating spaces, so as to enclose the plurality of groups of electrode assemblies in the plurality of accommodating spaces.

2. The battery according to claim 1, wherein two ends of the accommodating space each has an opening, the end cover comprises a first end cover and a second end cover, and the first end cover and the second end cover respectively cover openings at the two ends of the accommodating space; the plurality of pairs of electrode terminals comprise a plurality of positive electrode terminals and a plurality of negative electrode terminals, the plurality of positive electrode terminals are arranged on the first end cover, and the plurality of negative electrode terminals are arranged on the second end cover; and each of the accommodating spaces corresponds to one of the positive electrode terminals and one of the negative electrode terminals.

3. The battery according to claim 1 or 2, wherein an inner wall of the accommodating space or an outer wall of the insulating housing is coated with a metal layer.

4. The battery according to claim 1 or 2, wherein an outer wall of the insulating housing is cladded with an aluminum-plastic film.

5. The battery according to any one of claims 1 to 4, wherein the end cover is connected to the insulating housing and the barrier in a sealing manner by fixing glue.

6. The battery according to any one of claims 1 to 5, wherein the end cover is formed by welding a plurality of metal sub-end covers, and each of the metal sub-end covers is provided with electrode terminals corresponding to at least one of the accommodating spaces.

7. The battery according to any one of claims 1 to 5, wherein the end cover is formed by injection molding of a plurality of metal sub-end covers, and each of the metal sub-end covers is provided with electrode terminals corresponding to at least one of the accommodating spaces.

8. The battery according to any one of claims 1 to 5, wherein the end cover is formed by arranging electrode terminals corresponding to the plurality of accommodating spaces on a plastic plate.

9. The battery according to any one of claims 1 to 8, wherein the insulating housing is made of at least one of polypropylene, glass fiber plastic, maleic anhydride grafted polypropylene and nylon composite structural plastic.

10. The battery according to any one of claims 1 to 9, wherein the electrode assembly is provided with tabs, and the battery further comprises:
a connection member configured to connect the tabs and the electrode terminals.

11. The battery according to any one of claims 1 to 10, wherein the battery further comprises:
a bus component configured to electrically connect electrode terminals corresponding to the plurality of accommodating spaces.

12. The battery according to any one of claims 1 to 11, wherein the insulating housing is integrally formed by extrusion.

13. A power consumption apparatus, comprising the battery according to any one of claims 1 to 12, wherein the battery is configured to provide electrical energy for the power consumption apparatus.

14. A method for producing a battery, comprising:
providing a plurality of groups of electrode assemblies;
providing an insulating housing, wherein the insulating housing comprises a plurality of accommodating spaces, each accommodating space has an opening, adjacent accommodating spaces are separated by a barrier, and each accommodating space is used to accommodate one group of the electrode assemblies; and
providing an end cover provided with a plurality of pairs of electrode terminals, wherein each pair of electrode terminals corresponds to one of the accommodating spaces,
wherein the end cover is connected to the insulating housing, and covers openings of the plurality of accommodating spaces, so as to enclose the plurality of groups of electrode assemblies in the plurality of accommodating spaces.

15. An apparatus for producing a battery, comprising:
a providing module configured to:
provide a plurality of groups of electrode assemblies;
provide an insulating housing, wherein the insulating housing comprises a plurality of accommodating spaces, each accommodating space has an opening, adjacent accommodating spaces are separated by a barrier, and each accommodating space is used to accommodate one group of the electrode assemblies; and
provide an end cover provided with a plurality of pairs of electrode terminals, wherein each pair of electrode terminals corresponds to one of the accommodating spaces,
wherein the end cover is connected to the insulating housing, and covers openings of the plurality of accommodating spaces, so as to enclose the plurality of groups of electrode assemblies in the plurality of accommodating spaces.
